# EUROPEAN PATENT SPECIFICATION

(11) **EP 3 224 757 B1**
(45) Date of publication and mention of the grant of the patent: **15.07.2020**
(21) Application number: 14828169.4
(22) Date of filing: 30.12.2014
(51) Int. Cl.: G06F 21/62

(54) **IN-DEVICE PRIVACY FRAMEWORK FOR SMART GLASSES AND SMART WATCHES**
RAHMENWERK FÜR VORRICHTUNGSINTERNEN DATENSCHUTZ FÜR INTELLIGENTE BRILLEN UND INTELLIGENTE UHREN
STRUCTURE DE RESPECT DE LA VIE PRIVÉE INTRA-DISPOSITIF POUR LUNETTES CONNECTÉES ET MONTRES CONNECTÉES

(43) Date of publication of application: 04.10.2017
(73) Proprietor: Deutsche Telekom AG, 53113 Bonn (DE)
(72) Inventor: HARIS MUGHEES, Muhammad, Hong Kong 999077 (CN); HUI, Pan, Hong Kong 999077 (CN); PEYLO, Christoph, 49401 Damme (DE)
(74) Representative: Vossius & Partner Patentanwälte Rechtsanwälte mbB
(86) International application number: PCT/EP2014/079460
(87) International publication number: WO 2016/107651

(56) References cited:
- EP-A1- 2 157 781
- US-A1- 2012 177 248
- US-A1- 2014 109 231
- US-A1- 2014 112 534

## Description

### Technical Field

The present invention generally relates to a framework for privacy in smart devices like smart glasses or smart watches. In particular, the present invention relates to a method of providing a framework to ensure privacy of people which are detected by a camera, preferably a digital camera of a smart device. The framework of the present invention can be provided by a system and/or a method which guarantees that privacy of people on photos taken by the camera of the smart device is preserved, preferably by using in-device techniques. Preferably, the framework is implemented as software and/or hardware in the smart device.

### Background of the invention

Smart glasses are wearable computing devices in the form of computerized eyeglasses, which typically comprise an optical head-mounted display (OHMD). Due to latest developments in wearable technology modern smart glasses typically possess enhanced data processing functionality similar to a smart phone or tablet and are able to run sophisticated applications (in the following also called apps). These devices can also include special features such as augmented reality overlay, GPS and mapping capability.

Another smart device is a smartwatch (or smart watch), which is a computerized wristwatch with functionality that is enhanced beyond timekeeping, and is often comparable to a personal digital assistant (PDA) device. Similar to smart glasses, smartwatches run mobile apps and a number of models run a mobile operating system. Such devices may include features such as a camera, cell phone, touch screen, GPS navigation, Map display, etc.

Despite all the advantage, these smart devices also give rise to new challenges about privacy. A main feature regarding this aspect is the camera used in these smart glasses. Since the smart glass is controlled by the wearer, the wearer can control when photos or videos are taken, i.e., a wearer would typically not necessarily ask for permission from those around the wearer. Even though every user of a mobile phone or smartphone can also take photos and videos, in most cases it is easy to recognize when the user is taking a photo or a video, because the user has typically to hold up the smartphone. Due to size and nature of the smart glasses, however, it is a lot harder (if not impossible) to recognize when a wearer is taking a photo or a video with a smart glass.

Moreover, face recognition capabilities can be easily integrated into smart glasses. Thus, photos and videos of people from the on-device camera of the smart glass can be identified with facial recognition software. Once identified, the wearer of the smart glass could be presented with the person's Facebook profile, Twitter feed or other internet search results linked to his/her profile. Individuals typically do not expect such an automated link with their internet data if they move in public, they have an expectation of anonymity.

These privacy issues are serious and have gained attention on official and personal levels. For example, the "Google Glass™" is known in the art. The device is capable of recording audio, video, and photos. This device can also use GPS (Global Positioning System) for location-tracking and directions. The device is further capable of handling computational tasks as it is also equipped with processor chip and GPU. For instance, there exists an application (app) to take pictures surreptitiously by winking. To an outside individual it is difficult or impossible to recognize whether the user of the smart glass is recording audio or video with the smart glasses. Furthermore, all data recorded by the smart glass, including photos, videos, audio, location data, and user data, can be stored in a cloud server, e.g., on Google's cloud servers. Present smart glass can connect to the Internet via Wi-Fi, or tether to the user's smartphone. Moreover, even when temporary offline the smart glass can record audio and/or video.

Recently members of Congress asked Google Inc. Chief executive to give assurances about privacy safeguards for smart glass devices. Moreover a new survey of around 4,000 UK residents conducted by Rackspace and Goldsmiths at the University of London has found that 20 percent of respondents believe that smart glasses should be banned outright, while 61 percent think smart glasses and other wearable camera devices should at least be regulated. Another survey conducted by Bite Interactive shows that only 10% of USA residents trust in smart glasses. Moreover many private entertainment places have banned smart glasses.

There are already some efforts to change the privacy policy for smart glasses. For instance, the sale of any applications which use face recognition or which record video without turning on an indication light on the smart glass is restricted or forbidden in official market places or app stores.

Although there are already efforts to reduce the above mentioned privacy risk by smart glasses, the known methods are not sufficient to grantee privacy. For example blocking of face recognition apps in an official app market cannot restrict developers to develop face recognition apps.

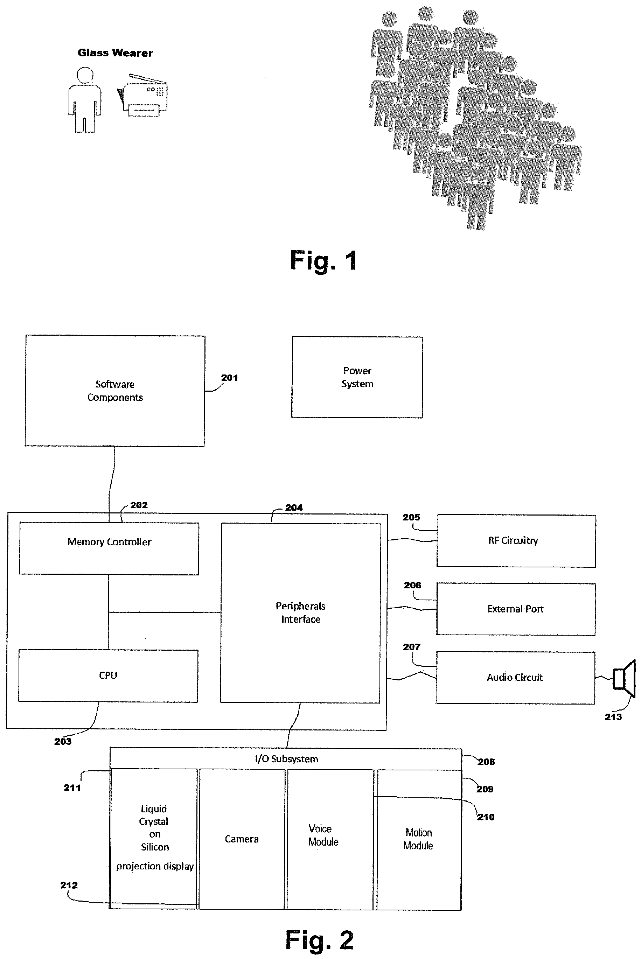

Moreover, since privacy concern is related to people around a glass wearer, trust cannot be made on glass owners. For example figure 1 shows a normal scenario which occurs when a person with a smart glass moves in public. The plurality of people believes that they are almost anonymous in the public. In this situation, however, once a glass wearer takes pictures or videos of people around him/her, he/she can perform face recognition and identify the persons around him/her.

Privacy systems for video surveillance systems and video sharing systems are known, wherein privacy is preserved by altering videos by adding noise (or blurring) or removing or replacing private objects from the videos. Thus, a major drawback of such systems is the fact that important information in pictures or videos is destroyed, which is undesirable in a smart glass.

US 2012/0177248 discloses a computer which alters at least one recognizable metric or text in a digitally-encoded photographic image by operating an alteration algorithm in response to user input data while preserving an overall aesthetic quality of the image and obscuring an identity of at least one individual or geographic location appearing in the image.

The article "A Scanner Darkly: Protecting user privacy from perceptual applications" by Jana, A. Narayanan, and V. Shmatikov, published 2013, proposes a privacy layer for visual systems.

Accordingly, there is a need of privacy framework which ensures privacy of people around smart glasses or smart watches. In addition, it is further preferred that glass owners can still take photos or videos from their fiends without violation of privacy.

### Summary of the invention

The invention is defined by the features of the independent claims. Dependent claims refer to preferred embodiments.

According to one aspect of the present invention, an in-device automated privacy framework for a smart device, such as smart glasses or smart watches is proposed. The present invention, however, is not restricted to these particular types of smart devices. For instance, the present invention can also be implemented in smart phones, mobile phones, webcams, action cams etc.. A goal of the present invention is to protect the privacy of individuals while preserving sufficient information. The present invention preferably focuses on the camera feature of the device.

The framework of the present invention preferably comprises the feature of a human detection in images from an on-device camera. Furthermore, based on a result from detection, robust tracking algorithm is preferably used, as any error in tracking will typically increase the chances of recognition. In addition, after detection and tracking, the framework further comprises an intelligent de-identification.

Preferably, the framework of the present invention will provide balance between privacy and utility. The framework of the present invention is preferably intelligent to preserve privacy while keeping functionality of camera and sufficient information in the image or video.

It should be appreciated that for the ease of explanation the embodiments are preferably explained for images, but the present invention is also capable of working with videos in which each frame of video can be treated as separate image. Current image processing applications treat videos in the same way. It should further be appreciated that for the ease of explanation the majority of embodiments are preferably explained for smart glasses, but the present invention is also capable of working with smart watches or other smart devices, particularly smart devices as exemplified above.

Preferably, de-identification is an important feature of the present framework. De-identification preferably maintains balance between utility and privacy. Utility is a function of amount of features or information in the image.

Preferably, face de-identification will factorize the face parts into identity and non-identity factors using a generative multi-factor model. De-identification is applied on combined factorized data then de-identified images are reconstructed from this data.

Moreover, the framework will preferably reside inside the smart device and will preferably be automated to ensure firewall against any kind of privacy breaching attempt. Most advance smart glasses have slimmed down yet adequate operating systems, usually these are software stacks running on mature kernels.

The program or framework of the present invention is preferably located at an abstraction layer near the operating system kernel, wherein said layer near the operating system kernel is not manipulatable/accessible by applications programmed by application developers.

The exact location of the framework of the present invention could slightly vary depending on architecture of the operating system. For example, Google Glass has android operating system running in its core. In order to keep the framework of the present invention from hacking attempts of developers, preferably it should exist in libraries layer of android software stacks.

It should be noted that the present invention is preferably composed of highly independent modules. Here modules and their sequence are defined for the reference although framework is also capable of working with different modules set and sequence.

According to a first aspect, the present invention relates to a method for preserving the privacy of persons detected by a camera of a smart glass or smart watch, the method comprising at least one of the following steps: taking at least one image of a face by means of the camera of the smart glass/smart watch, detecting a face in the image taken by the camera, generating a state signal if a face is detected in the image, tracking identity features of the detected face in case a state signal is generated; and de-identifying identity features in the taken image.

In order to protect the framework against manipulation, it is preferred that the method is implemented as a framework or program which is located at a layer near the operating system layer or the kernel, wherein said layer near the operating system layer is preferably not manipulatable/accessible by applications programmed by application developers.

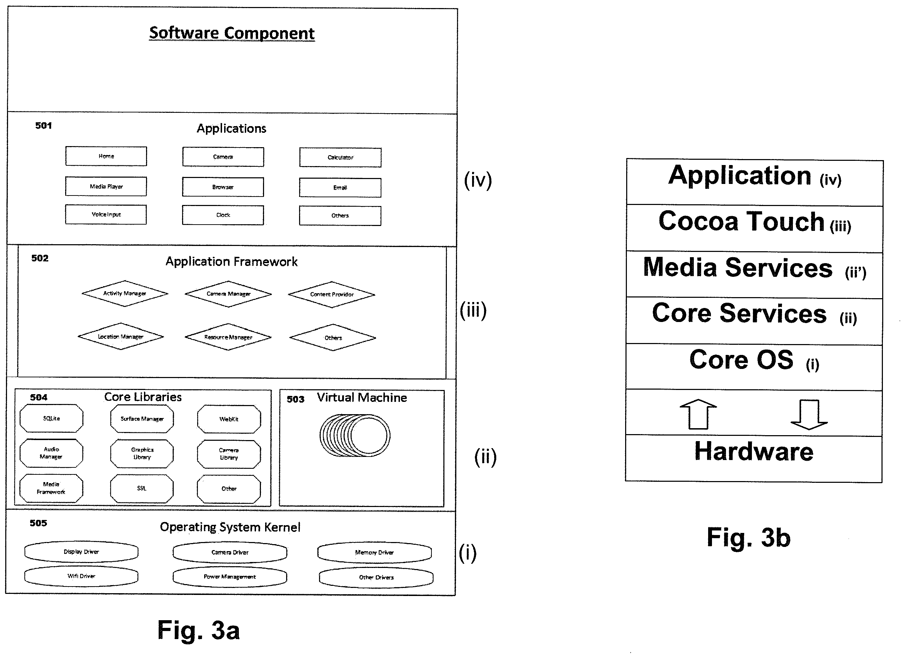

In other words, in Fig. 3a frameworks for developers are given in the Application Framework (iii). In Fig. 3b, such frameworks for developers are given in the cocoa touch layer (iii). Thus, it is preferable that the framework of the present invention should reside below the layer which contains the application frameworks for developers, e.g., below Application Framework (iii) in Fig. 3a and below the cocoa touch layer (iii) in Fig. 3b. Still in other words, it is preferred that the framework of the present invention should preferably reside below layer (iii) and above layer (i). For instance, the framework of the present invention should preferably reside in layer (ii) in Fig. 3a and preferably in the Media Service (ii') in Fig. 3b.

The use of abstraction layer is well known in software models, e.g., the OSI 7-layer model for computer network protocols, the OpenGL graphics drawing library, and the byte stream input/output (I/O) model originated by Unix and adopted by MS-DOS, Linux, and most other modern operating systems.

For instance, Fig. 3 shows an example of individual software components in different abstraction layers of a device operated by Android. In particular, Android is an operating system based on the Linux kernel with a user interface based on direct manipulation, designed primarily for touchscreen mobile devices such as smartphones and tablet computers, using touch inputs, that loosely correspond to real-world actions, like swiping, tapping, pinching, and reverse pinching to manipulate on-screen objects, and a virtual keyboard. Despite being primarily designed for touchscreen input, it also has been used in televisions, games consoles, digital cameras, and other electronics.

In order to protect the framework of the present invention against manipulation by application developers, it is preferred that the framework is implemented as a service which is preferably located in a layer near the operating system layer or the kernel. This layer is preferably not prune to hacking/manipulation by applications developers.

The purpose of this preferred requirement is to protect the framework from hacking attacks by developers. Therefore a preferred location or implementation for the framework is preferably (directly) after the layers which are not accessible to developers and/or in a layer which is not accessible by a developer. Usually, developers can write code to access services (camera, speaker, call log) for their applications.

In particular, almost all of advanced operating systems of smart glasses or devices can be divided in abstraction layers. These layers typically separate different functional units of the operating system. Although a fine grained detail of these abstraction layers may differ between operating systems, on higher level these operating systems are preferably divided typically into:
iv) Applications or application layer;
iii) Development frameworks, also called application framework or application framework layer;
ii) Service and Libraries; and
i) Core OS/Kernel.

The framework of the present invention should preferably be located below iii) but above i). One such example of an Android OS, which is used for example in google glasses, is shown in the Fig. 3 a.

Android relies on Linux based kernel which acts as an abstraction layer between the hardware and the rest of the software stack. Fig. 3a shows the Linux based kernel (Operating System Kernel) at 505 or layer (i). This layer (i) contains kernel or core os elements of operating system.

The middleware level includes Virtual Machine and Libraries. Fig. 3a shows the Virtual Machine at 503 and Libraries at 504. This "middleware level" is layer (ii) in Fig. 3a. For instance, the Virtual Machine includes Core Libraries, which allow each application to run in its own process. The Libraries are used by various components of the Android system, such as Media Libraries, 3D libraries, and etc. For instance, the Libraries 504 include services and libraries like OpenGL ES (graphics framework) and SQLite (data base library). This layer (ii) contains services and libraries of the operating system.

The next upper level is Application Framework and Applications. Fig. 3a shows the Application Framework at 502 or layer (iii). The Application Framework is offering developers the ability to build rich and innovative applications. Developers are free to take advantage of the device hardware, access location information, run background services, set alarms, add notifications to the status bar, and much, much more. This layer (iii) contains development frameworks of the operating system. Finally, at (iv) the Applications are located at 501.

Moreover, as a further example, reference is made to Fig. 3b, which shows the architecture of iOS, i.e., the operation system which is currently used in Apple smart devices.

The Cocoa Touch layer (iii) provides the fundamental infrastructure used by application. For example, the Foundation framework provides development support for collections, file management, network operations, and more. This layer contains development frameworks of operating system. Although some names in Android OS and iOS are different, it can be seen that the abstraction layers of the operating system comprise an iv) application layer, e.g., applications 501 in Fig. 3a and Application (iv) in Fig. 3b.

Like the Application Framework (iii) in Android, iOS also provides a similar layer, namely the Cocoa Touch which is a UI (user interface) framework for building software programs to run on the iOS operating system (for the iPhone, iPod Touch, and iPad) from Apple Inc. Cocoa Touch provides an abstraction layer (iii) of iOS. The Cocoa Touch layer provides the fundamental infrastructure used by an application. For example, the Foundation framework provides development support for collections, file management, network operations, and more. This layer contains development frameworks of the operating system.

Below said layer, the (iii) application framework or application framework layer is located, e.g., application framework 502 in Fig. 3a and (iii) Media Services (ii') and Core Services (ii) in Fig. 3b are located. In particular, the Core Services and the Media layers of iOS contain libraries, services and frameworks like SQLite, OpenGL ES, Location manager etc. This layer contains services and libraries of operating system (see Fig. 3b).

Finally at the lowest layer, the layer (i) directly communicates with the hardware (see e.g. Fig. 3b). This layer is called core (kernel), e.g., the operating system kernel 505 in Fig. 3a and the Core OS Fig. 3b. Like the Android kernel layer the Core OS acts as an abstraction layer between the hardware and the rest of the software stack. This layer contains kernel or core OS element of operating system.

Most operating systems of sophisticated smart glasses comprise an operating system kernel (e.g. core OS) and a hardware abstraction layer (see e.g. "Hardware" in Fig. 3). This hardware abstraction layer manages hardware resources and provides interface for hardware components like camera, microphone and speaker etc. This layers are the lowest layers in the abstraction layer model.

Libraries and services reside/exist in combined or separate layers just after this layer hardware abstraction layer and use hardware abstraction interfaces to perform their dedicated tasks.

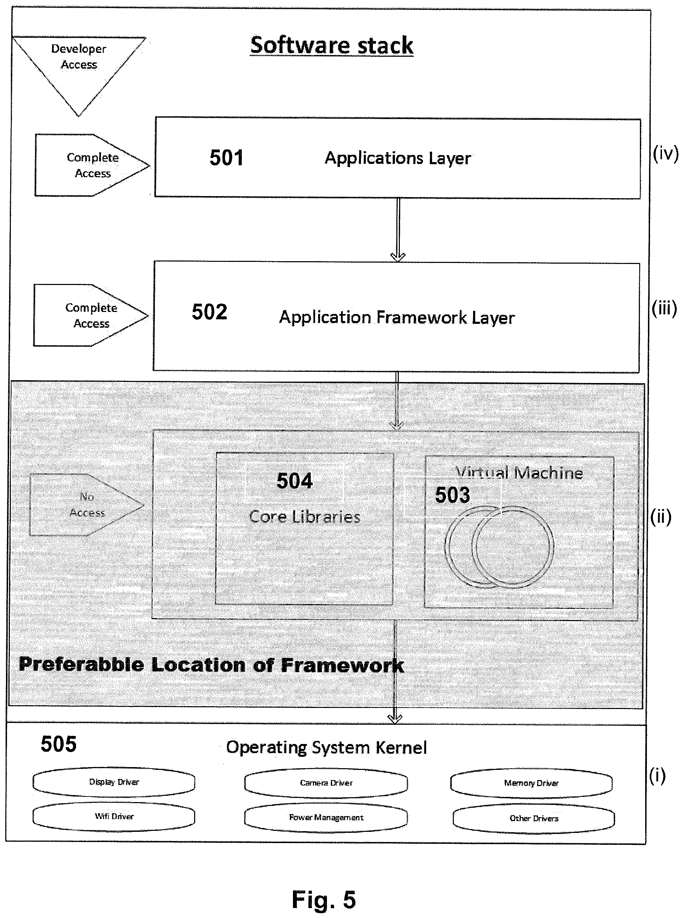

As shown, for example, in Fig. 5 usually layers until services (see layers (iv) and (iii); 501 and 502) are accessible to developers. Therefore layers after services, e.g., layers (ii') and (ii) are not prune to manipulation/ hacking. According to the present invention, it is preferable to reside the framework of the present invention after services layer, e.g., below layer (iii) like in layer (ii') or (ii). Moreover, according to a further embodiment, it would be further preferred that the framework should be inside kernel layer (e.g. layer (i)). However, it can be located anywhere between services and kernel layer.

Moreover, according to a further preferred embodiment, it is explicitly mentioned that the framework according to the present invention is preferably not an "application" and therefore does not require SDK (software development kit) of the operating system. The framework can preferably be implemented directly in the kernel using languages like C and C++. Moreover, if the framework is located just after services, then it can also use functions of library like OpenGL.

Moreover, according to a further preferred embodiment the framework of the present invention does not necessarily require to be a separate abstraction layer. Since it is preferably related to only one hardware feature that is preferably the camera it is possible that the framework resides within current abstraction layers of the operating system.

In order to reduce the energy consumption, which is limited by small batteries in smart glasses or smart watches, the method preferably works in an idle state if no face is detected in the image and no state signal is generated, such that the tracking step is not performed.

The above mentioned step of tracking identity features preferably tracks movement of detected faces and/or extracts features of the faces like pose, expression and/or shape.

The step of de-identification is a method of preferably removing facial identification information from the image while keeping as much as possible information. There are a plurality of de-identification known in the art which may be implemented in the method or framework according to the present invention.

Preferably, the de-identification step divides input data into identity and non-identity factors, wherein de-identification is preferably performed on identity factors by taking average of k inputs.

The present invention also relates to a system for preserving the privacy of persons detected by a camera of a smart glass or smart watch, the system comprising: a camera module for taking at least one image of a face by means of the camera of the smart glass, a detection module for detecting a face in the image taken by the camera, a state module for generating a state signal if a face is detected in the image, a tracking module for tracking identity features of the detected face in case a state signal is generated; and a de-identification module for de-identifying identity features in the taken image.

The detection module, state module, tracking module and/or de-identification module are preferably located on a layer directly above the operating system kernel and below an application framework layer in the smart glass.

Further, the present invention relates to a computer program comprising computer executable program code adapted to be executed to implement the method of the present invention when being executed.

In the context of the present invention, the term "framework" can relate to a set of methods and a system. Moreover, the term video is not restricted to moving visua images but also relates to single visual images (photos).

### Brief description of the drawings

The present invention is described in more detail herein below by way of exemplary embodiments and with reference to the attached drawings, in which:
- Fig. 1: illustrates a situation with a user wearing a smart glass at a place with a plurality of persons;
- Fig. 2: shows the basic components of a smart glass;
- Fig. 3a: shows the basic software components of Android OS, e.g., as used in a smart glass;
- Fig. 3b: shows the architecture of iOS, which is rurrently used in Apple smart devices;
- Fig. 4: shows some components of a camera module as used in a smart glass;
- Fig. 5: shows a software stack of a framework according to the present invention;
- Fig. 6: shows a flowchart illustrating preferred method steps according to the present invention; and
- Fig. 7: shows a further flowchart illustrating preferred method steps of a further preferred embodiment according to the present invention.

### Detailed description of the invention

Some preferred embodiments according to the present invention are now described with reference to the drawing. For explanation purpose, various specific details are set forth without departing from the scope of the present invention as claimed.

To preserve the privacy of users, a preferred heterogeneous framework can be used which exploits face de-identification. In particular, such a de-identification can be applied to improve privacy concerns and increase trust on technology. For augmented reality applications the preferred framework according to the present invention can do the following: 1) preserve the privacy of the users around the device; 2) keep the quality images and videos of places by staying in idle state if a person is not detected in the image; and/or 3) keep decent utility of the device by de-identifying only identity factors in images.

For instance, Figure 2 illustrates components of a smart glass (also called "device" in the present specification) according to a preferred embodiment of the present invention. The device according to the present invention preferably comprises at least one of the following features: a memory (not shown), a memory controller 202, a processor (CPU) 203, a peripheral interface 204, RF circuitry 205, audio circuitry 207, a speaker 213, a microphone 210, an input output subsystem 208, a Liquid Crystal on Silicon projection display 211, a camera 212, software components 201 and other input or control devices 209. These components preferably communicate over one or more communication buses or signal lines. The device can be any smart glasses and it should be appreciated that the illustrated device is only one preferred example for smart glasses and the device according to the present invention may have more or fewer components as shown in Fig. 2. The various components shown in Fig. 2 may be implemented in hardware and/or software.

Figure 3a gives a detailed overview of preferred software components of a device of the present invention. In an exemplary embodiment the software components include at least one of the following components: operating system kernel 505, core libraries 504, a virtual machine (run time libraries) 503, an application framework 502 and one or more applications 501. Again, the device according to the present invention is not restricted to the shown components, i.e., more or less software components can be used in other embodiments of the present invention.

The operating system kernel 505 preferably comprises various software components and drivers for controlling and managing general system tasks (e.g. memory management, storage device control, power management, security settings etc.) and facilitates communication between various software and hardware components. For instance, the operating system kernel 505 may comprise: a display driver, a WiFi driver, a camera driver, a power management, a memory driver and/or other drivers.

On top of kernel 505 there are preferably core libraries 504. These libraries preferably comprise instructions which tell the device how to handle different kind of data. These core libraries may comprise a plurality of modules like open-source Web browser engine, SQLite database which is a useful repository for storage and sharing of application data, libraries to play and record audio and/or video, SSL libraries responsible for Internet security etc.

A virtual machine and/or runtime libraries 503 may exist on the next layer. This layer preferably enables each application to run in its own process with its own instance of virtual machine. This design of virtual machines is preferred to ensure that individual applications are independent from other applications. This construction with virtual machines further provides the preferred advantage in case an application crashes. By this construction it can be easily ensured that the remaining applications are not affected by any other applications running on the device, i.e., a crashed application does preferably not influence the other running applications.

The next layer is the application framework 502. This layer includes the programs that manage the device's basic functions like resource allocation, switching between processes or programs and keeping track of the device's physical location, etc. Usually, application developers have full access to the application framework 502. This allows developers to take advantage of processing capabilities and support features when building an application. In other words, the application framework can be seen as a set of basic tools which can be used by a developer for building more complex tools or applications.

The next illustrated layer in Fig. 3a is the application layer 501. This layer comprises applications like camera app, calculator, image gallery etc. Typically, a user of the device interact only with applications (apps) of this layer.

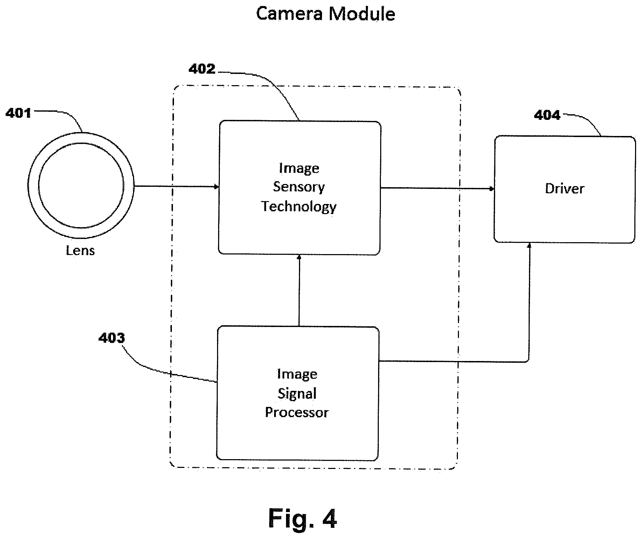

Figure 4 shows the main components of a camera module as implemented in a smart glass according to the present invention. For instance, a camera module of the device according to the present invention includes an optical lens 401, images sensor technology 402, image signal processor 403 and driver 404. The lens 401 is preferably configured for taking high resolution photos and/or record high definition videos. The image and/or video sensor 402 converts an optical image into an electronic signal. Most digital devices use either a CCD image sensor or a CMOS sensor. Both types of sensor accomplish the same task of capturing light and converting it into electrical signals. There is a communication between image sensor and image signal processor to better interpret the scene captured with the lens. An image processor 403 is preferably a specialized digital signal processor used for image. Often it is a system on a chip with multi-processor / multi-core processor architecture. Furthermore, when taking videos one additional component, often called video encoder, may additionally be uses. Driver 404 preferably provides an interface or bridge between the hardware chips and software libraries.

Referring back to Fig. 2, the I/O subsystem208 provides an interface between input output peripherals on the device. In an exemplary embodiment according to the present invention, an I/O subsystem has a voice module 210 which comprises, for example, a microphone and/or a power full voice controller. The voice module 210 provides an input interface between the user and the device. For instance, the voice module 210 receives voice signals (acoustic signals) from the user and converts these acoustic signals into electrical signals. The voice signals could be commands which enable users to control and navigate through different features (such as menus, camera etc.) of the device. For example, a user of the Google Glass can say commands like *"okay glass take picture"* to take pictures with the device's camera.

In some embodiments, the device may additionally contain a motion module 209 for activating and deactivating different functions. This module 209 preferably comprises a motion detection sensor, such as a gyro sensor or an accelerometer sensor. This module can be used to translate user motion into commands used to control device.

Some embodiments also use camera module 212 as an input interface. For instance, the device projection screen superimposes augmented reality content in front of a user, wherein input is created by touching particular section of the content. A camera module picks the users "virtual touching" and converts it into an input signal.

The present invention provides an automated in-device privacy framework for smart glasses. In other words, according to the present invention, a smart glass is provided with a module which is presented inside the smart glass to ensure privacy of people detected by the camera of the smart glass. Still in other words, the term "in-device" should be interpreted as a component which is already build in the device and is preferably not manipulateable by software installed afterward (apps) on the device. Due to this "in-device" implementation, privacy of people recognized by the camera of the device can be ensured.

The effectiveness of framework of the present invention is dependent on its location inside the device. In the sense of the present invention, location is preferably not the physical location, rather the location or arrangement in picture of software components or software layers as illustrated in Figs. 3, 5 and 6. Still in other words, location means the level at which the framework is located and the corresponding interfaces.

Preferably, the location of the framework is dependent on the architecture of the operating system used inside the smart glass. However most of the operating systems in smart glasses are software stacks, which have some degree of similarity in their architecture.

Figure 5 represent one preferred location of the framework in case of a smart glass which has android operating system. In particular, Figure 5 shows accessibility level of application developers with respect to operating system layers. Applications developers usually can access application framework layer of the device.

Figure 5 also shows that the location of the framework according to the present invention should preferably be close to the operating system kernel. According to a further preferred embodiment it can be located just next to camera driver. This location will allow the framework to work in automated way and preferably hides it from hacking attempts of developers. In other words, it is preferred that the framework runs automatically at a layer which is not manipulable by a user.

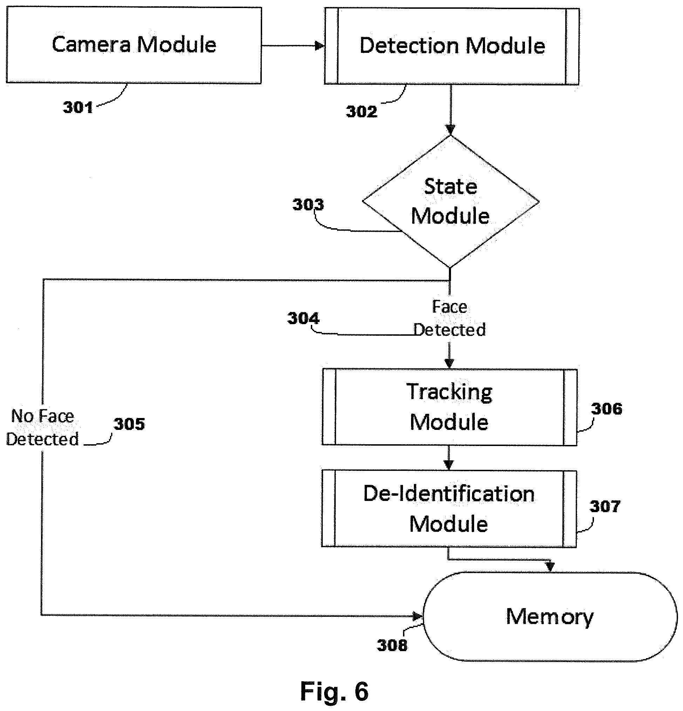

The framework of the present invention is preferably composed of four main components, which are shown in figure 6. In an exemplary embodiment, the user of the device uses any input method explained before, to turn the camera module for taking images. The framework receives direct input from the camera module 301, wherein this input can be images and/or videos. After following some steps, the framework transforms inputs into privacy preserved output. However it can be seen that privacy is highly concerned about removing the chance of recognizing a person in input (image or video) through any current technology. The framework preferably works in two states.

First if no face is detected (step 305) by a detection module 302 in the images then state module 303 will keep the framework in an idle state. In other words, no state signal will be generated. According to a further implementation, a state signal is present but is "false" or 0 (zero).

Second, if a face is detected (step 304), state module 303 will send an input to other components. In other words, a state signal will be generated. According to a further implementation, a "true" state signal or a "1" will be generated indicating that a face is detected.

Tracking 306 will then be applied on the detected face. Preferably output of detection 302 will become input of the tracking 306. Finally, using the output of tracking 306, de-identification module 307 will remove identification information from the image.

In automated system - such as system of this invention - face detection 302 should preferably meet the criteria necessary for success given limited computational and computer memory. Preferably, the system should operate rapidly and with sufficiently high performance in terms of true /false positive detection rate. This is a challenge since a typical search area is preferably the entire view of the camera which is often as large as 800 by 550 pixels. Current algorithms meet this challenge and can perform real time detection. For example, some embodiments use multiscale and/or multicue search strategy, which permits the entire field of view to be searched at the considerably higher search speed.

Multiscale search algorithms initially search for faces in low resolution and switch to high resolution only when the search indicates head like shape. Multicue methods search for easily detected face cues in the start. For example presence of face in the field of view often create discontinuities in color domains of image or video. Multicue search for these discontinuities and further examine only those areas where discontinuity exists. However other methods can be used by other embodiments.

In preferred embodiments, state module 303 of the framework controls the working state of the framework. The state module 303 works with detection module 302. If a person or face is detected 304 in the image, state module will activate other components of the framework by transferring the output from the camera module (images or videos) to the framework; preferably a state signal is "true". However, if no face is detected (step 305) by detection module 302, state module 303 will keep other components of framework idle by not sending input to them; preferably the state signal is "false". Thus, state module 303 can save limited battery and computational power.

If the result of face detection 302 is true, input is sent by state module 303 to the tracking module 306. Tracking 306 is preferably efficient and robust such that the tracking preferably determines the face position, size and pose. In one preferred embodiments this module creates a feature mask of the detected face. A feature mask is a set of parameters to characterize identity, movement, state, pose expression etc. For example one such algorithm is Active Appearance Modeling (AAM), which initially creates face model by applying series of transformation and taking mean shape of initial face-image set. The algorithm then uses comparison with this model to estimate features of faces (pose, expression, shape etc.) in new images.

It should be noted that irrespective of the used method, tracking module 306 is preferably dependent on results of detection module 302. In some embodiments, tracking 306 uses a result of detection 302 as an initial approximation to reduce the scanning area of the image. It should also be noted that if more than one face is detected 302 in the image, tracking module 306 will keep track for each face in the image.

After tracking 306, the present invention includes a de-identification 307. De-identification means removal of identifying information from the images or videos, prior to sharing of data. The goal of this module is to protect identity and preserver utility, e.g. the ability to recognize gender or facial expressions from the de-identified images. Here data utility is a function, which associates each image one. It is preferably assumed that for each face image the correct class is known. Examples of image classes include facial expressions {neutral, smile}, gender {male, female}, and eye status {open, closed}.

Many algorithms exist which provide provable performance and privacy. For instance in the following articles de-identification is discussed in further detail: E. Newton, L. Sweeney, and B. Malin; "Preserving privacy by de-identifying facial images"; IEEE Transactions on Knowledge and Data Engineering, 2005. R. Gross, E. Airoldi, B. Malin, and L. Sweeney; "Integrating utility into face de-identification"; in Workshop on Privacy Enhancing Technologies (PET), June 2005. Gross, R., Sweeney, L., dela Torre, F., Baker, S.: "Model-based face de-identification"; Workshop on Privacy Research in Vision. IEEE (2006)

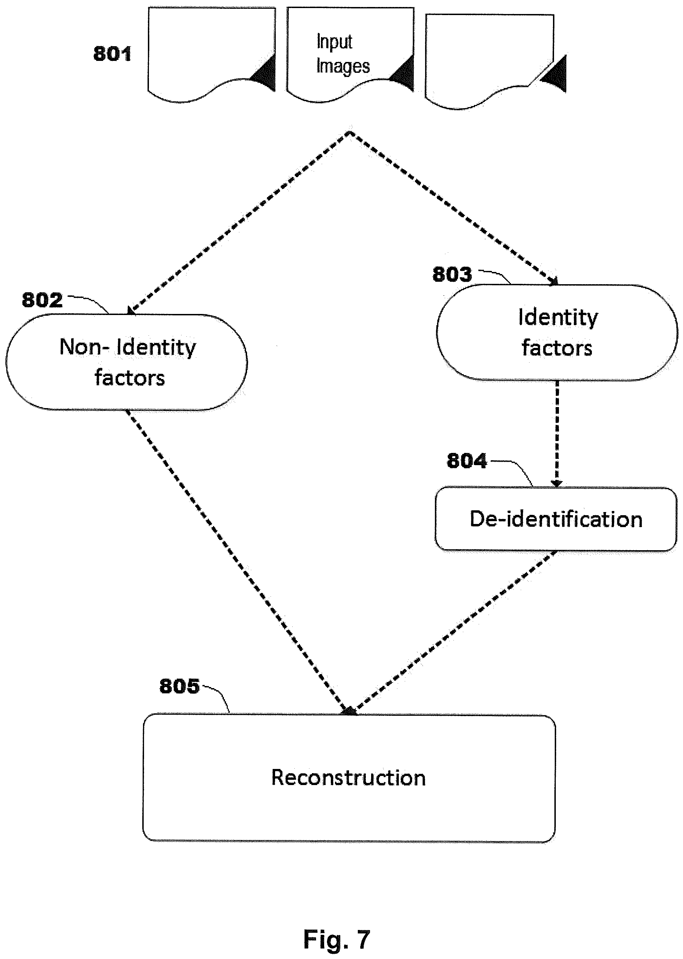

For reference one preferred method for exemplary embodiment is explained in Figure 7. Using the result of active appearance model tracking, this method divides the image into identity 802 and nonidentity 803 features sets. Identity features 803 include position and shape of eyes, nose, and lips etc. Nonidentity features 803 include pose, illumination, facial expressions. Current segmentation techniques can be applied for this purpose. Further methods apply de-identification 804, by taking average of identity feature sets of k images. Average identity feature set of k images is combined with each image's non- identity set to reconstruct 805 de-identified images.

The foregoing description, for the purpose of explanation, has been described with reference to specific embodiments. However, the illustrative discussions above are not intended to be exhaustive or to limit the invention to the precise form disclosed. Many modifications and variations are possible in the view of the above teachings. The embodiments were chosen and described in order to best explain the principles of the invention and its practical applications, to thereby enable other skilled in the art to best utilize the invention and various embodiments with various modifications as are suited to the particular use contemplated.

## Claims

1. A method for preserving the privacy of persons detected by a camera of a smart device, like a smart glass, the method comprising the steps:
taking at least one image of a face by means of the camera of the smart device,
detecting a face in the image taken by the camera,
generating a state signal if a face is detected (304) in the image,
tracking identity features of the detected face in case a state signal is generated; and
de-identifying identity features in the taken image by removing facial identification information from the image,
wherein the method is implemented as a program or framework which is located on a layer directly above the operating system kernel (i) and below an application framework layer in the smart device, wherein said former layer is not manipulatable/accessible by applications programmed by application developers.

2. The method of claim 1, wherein the method is implemented as a program or framework which is located at
a) the libraries and virtual machine layer in an Android operating system, or
b) in the Media Layer in an iOS operating system.

3. The method of any of the preceding claims, wherein the method works in an idle state if no face is detected (305) in the image and no state signal is generated, such that the tracking step is not performed.

4. Method of any of the preceding claims , wherein the step of tracking identity features tracks movement of detected faces and/or extracts features of the faces like pose, expression and/or shape.

5. Method of any of the preceding claims, wherein the de-identification step avoids unduly pixilation and/or bluring the image such the image remains useful for friends.

6. Method of any of the preceding claims, wherein the de-identification step divides input data into identity and non-identity factors.

7. A system for preserving the privacy of persons detected by a camera of a smart device, like a smart glass, the system comprising:
a camera module (301) for taking at least one image of a face by means of the camera of the smart device,
a detection module (302) for detecting a face in the image taken by the camera,
a state module (303) for generating a state signal if a face is detected (304) in the image,
a tracking module (306) for tracking identity features of the detected face in case a state signal is generated; and
a de-identification module (307) for de-identifying identity features in the taken image by removing facial identification information from the image,
wherein the detection module (302), state module (303), tracking module (306) and de-identification module (307) are located on a layer directly above the operating system kernel and below an application framework layer in the smart device, wherein said former layer is not manipulatable/accessible by applications programmed by application developers.

8. The system of claim 7, wherein the method is implemented as a program or framework which is located at
a) the libraries and virtual machine layer in an Android operating system, or
b) in the Media Layer in an iOS operating system.

9. Computer program comprising computer executable program code adapted to be executed to implement the method of any one of the preceding method claims 1-6 when being executed.

## Patentansprüche

1. Verfahren zum Wahren des Datenschutzes von Personen, die durch eine Kamera einer intelligenten Vorrichtung, wie einer intelligenten Brille erkannt werden, wobei das Verfahren die Schritte aufweist:
Aufnehmen mindestens eines Bildes eines Gesichts mittels der Kamera der intelligenten Vorrichtung,
Erkennen eines Gesichts in dem durch die Kamera aufgenommenen Bild,
Erzeugen eines Zustandssignals, wenn ein Gesicht im Bild erkannt wird (304),
Verfolgen von Identitätsmerkmalen des erkannten Gesichts, falls ein Zustandssignal erzeugt wird; und
Anonymisieren von Identitätsmerkmalen im aufgenommenen Bild durch Entfernen von Gesichtsidentifikationsinformationen aus dem Bild,
wobei das Verfahren als ein Programm oder Programmiergerüst implementiert wird, das auf einer Schicht direkt über dem Betriebssystemkern (i) und unter einer Anwendungsprogrammiergerüstschicht in der intelligenten Vorrichtung angeordnet ist, wobei die erstgenannte Schicht nicht durch Anwendungen manipulierbar/erreichbar ist, die durch Anwendungsentwickler programmiert werden.

2. Verfahren nach Anspruch 1, wobei das Verfahren als ein Programm oder Programmiergerüst implementiert wird, das angeordnet ist:
a) in den Bibliotheken und einer virtuellen Maschinenschicht in einem Android-Betriebssystem, oder
b) in der Medienschicht in einem iOS-Betriebssystem.

3. Verfahren nach einem der vorhergehenden Ansprüche, wobei das Verfahren in einem Leerlaufzustand arbeitet, wenn kein Gesicht in dem Bild erkannt wird (305) und kein Zustandssignal erzeugt wird, so dass der Verfolgungsschritt nicht ausgeführt wird.

4. Verfahren nach einem der vorhergehenden Ansprüche, wobei der Schritt des Verfolgens von Identitätsmerkmalen eine Bewegung von erkannten Gesichtern verfolgt und/oder Merkmale der Gesichter wie die Haltung, den Ausdruck und/oder die Form extrahiert.

5. Verfahren nach einem der vorhergehenden Ansprüche, wobei der Anonymisierungsschritt eine übermäßige Verpixelung und/oder Verschwommenheit des Bildes vermeidet, so dass das Bild für Freunde nützlich bleibt.

6. Verfahren nach einem der vorhergehenden Ansprüche, wobei der Anonymisierungsschritt Eingangsdaten in Identitäts- und Nicht-Identitätsfaktoren unterteilt.

7. System zum Wahren des Datenschutzes von Personen, die durch eine Kamera einer intelligenten Vorrichtung, wie einer intelligenten Brille erkannt werden, wobei das System aufweist:
ein Kameramodul (301) zum Aufnehmen mindestens eines Bildes eines Gesichts mittels der Kamera der intelligenten Vorrichtung,
ein Erkennungsmodul (302) zum Erkennen eines Gesichts in dem durch die Kamera aufgenommenen Bild,
ein Zustandsmodul (303) zum Erzeugen eines Zustandssignals, wenn ein Gesicht in dem Bild erkannt wird (304),
ein Verfolgungsmodul (306) zum Verfolgen von Identitätsmerkmalen des erkannten Gesichts, falls ein Zustandssignal erzeugt wird; und
ein Anonymisierungsmodul (307) zum Anonymisieren von Identitätsmerkmalen im aufgenommenen Bild durch Entfernen von Gesichtsidentifikationsinformationen aus dem Bild,
wobei das Erkennungsmodul (302), das Zustandsmodul (303), das Verfolgungsmodul (306) und das Anonymisierungsmodul (307) auf einer Schicht direkt über dem Betriebssystemkern und unter einer Anwendungsprogrammiergerüstschicht in der intelligenten Vorrichtung angeordnet sind, wobei die erstgenannte Schicht nicht durch Anwendungen manipulierbar/erreichbar ist, die durch Anwendungsentwickler programmiert werden.

8. System nach Anspruch 7, wobei das Verfahren als ein Programm oder Programmiergerüst implementiert wird, das angeordnet ist:
a) in den Bibliotheken und einer virtuellen Maschinenschicht in einem Android-Betriebssystem, oder
b) in der Medienschicht in einem iOS-Betriebssystem.

9. Computerprogramm, das einen computerausführbaren Programmcode aufweist, der eingerichtet ist, ausgeführt zu werden, um das Verfahren nach einem der vorhergehenden Verfahrensansprüche 1 bis 6 zu implementieren, wenn es ausgeführt wird.

## Revendications

1. Procédé de préservation des données privées de personnes détectées par une caméra d'un dispositif intelligent, tel que des lunettes connectées, ledit procédé comprenant les étapes suivantes :
capture d'au moins une image d'un visage au moyen de la caméra du dispositif intelligent, détection d'un visage dans l'image capturée par la caméra,
génération d'un signal d'état si un visage est détecté (304) dans l'image,
suivi des caractéristiques d'identité du visage détecté dans le cas où un signal d'état est généré ; et
anonymisation des caractéristiques d'identité dans l'image capturée par suppression des informations d'identification faciale de l'image,
où ledit procédé est appliqué en tant que programme ou structure située sur une couche immédiatement supérieure au noyau de système d'exploitation (i) et inférieure à une couche de structure d'application dans le dispositif intelligent, ladite couche antérieure n'étant pas manipulable/accessible par des applications programmées par des développeurs d'applications.

2. Procédé selon la revendication 1, où ledit procédé est appliqué en tant que programme ou structure situé sur
a) la couche bibliothèques et machine virtuelle d'un système d'exploitation Android, ou
b) dans la couche Media d'un système d'exploitation iOS.

3. Procédé selon l'une des revendications précédentes, où ledit procédé fonctionne dans un état de veille si aucun visage n'est détecté (305) dans l'image et aucun signal d'état n'est généré, de sorte que l'étape de suivi n'est pas exécutée.

4. Procédé selon l'une des revendications précédentes, où l'étape de suivi des caractéristiques d'identité suit les mouvements des visages détectés et/ou extrait des caractéristiques des visages telles qu'attitude, expression et/ou forme.

5. Procédé selon l'une des revendications précédentes, où l'étape d'anonymisation empêche une pixellisation et/ou un floutage excessifs de l'image de telle manière que l'image reste utilisable pour des amis.

6. Procédé selon l'une des revendications précédentes, où l'étape d'anonymisation divise les données d'entrée en facteurs d'identité et facteurs de non-identité.

7. Système pour la préservation des données privées de personnes détectées par une caméra d'un dispositif intelligent, tel que des lunettes connectées, ledit système comprenant :
un module de caméra (301) pour la capture d'au moins une image d'un visage au moyen de la caméra du dispositif intelligent,
un module de détection (302) pour la détection d'un visage dans l'image capturée par la caméra,
un module d'état (303) pour la génération d'un signal d'état si un visage est détecté (304) dans l'image,
un module de suivi (306) pour le suivi des caractéristiques d'identité du visage détecté dans le cas où un signal d'état est généré ; et
un module d'anonymisation (307) pour l'anonymisation des caractéristiques d'identité dans l'image capturée par suppression des informations d'identification faciale de l'image,
où le module de détection (302), le module d'état (303), le module de suivi (306) et le module d'anonymisation (307) sont situés sur une couche immédiatement supérieure au noyau de système d'exploitation et inférieure à une couche de structure d'application dans le dispositif intelligent, ladite couche antérieure n'étant pas manipulable/accessible par des applications programmées par des développeurs d'applications.

8. Système selon la revendication 7, où le procédé est appliqué en tant que programme ou structure situé sur
a) la couche bibliothèques et machine virtuelle d'un système d'exploitation Android, ou
b) dans la couche Media d'un système d'exploitation iOS.

9. Programme informatique, comprenant un code programme exécutable par ordinateur pour appliquer le procédé selon l'une des revendications de procédé 1 à 6 une fois lancé.
